# EUROPÄISCHE PATENTSCHRIFT

(11) **EP 0 686 797 B1**
(45) Veröffentlichungstag und Bekanntmachung des Hinweises auf die Patenterteilung: **04.06.1997**
(21) Anmeldenummer: 95105994.8
(22) Anmeldetag: 21.04.1995
(51) Int. Cl.: F16L 9/12, F16L 11/04, F16L 11/12, B32B 7/12

(54) **Mehrschichtiges Kunststoffrohr mit guter Schichtenhaftung**
Multilayered plastic pipe with good layer adhesion
Tuyau multicouche en matière plastique ayant une bonne adhésion

(30) Priorität: 21.05.1994 DE 4418006
(43) Veröffentlichungstag der Anmeldung: 13.12.1995
(73) Patentinhaber: HÜLS AKTIENGESELLSCHAFT, 45764 Marl (DE)
(72) Erfinder: Röber, Stefan, Dr., D-22453 Hamburg (DE); Herrmann, Hans-Dieter, D-45770 Marl (DE)

(56) Entgegenhaltungen:
- EP-A- 0 522 380
- EP-A- 0 542 182
- EP-A- 0 542 184
- EP-A- 0 569 681
- EP-A- 0 637 509
- GB-A- 2 029 766

## Beschreibung

Gegenstand der Erfindung sind mehrschichtige Kunststoffrohre aus Polyolefinen und einer Sperrschicht aus thermoplastischen Polyestern.

Kunststoffrohre aus Polyolefinen, insbesondere Polyethylen und Polypropylen, sind bekannt und werden für viele Anwendungen eingesetzt. Um ihre Aufgabe zu erfüllen, müssen die Rohre u. a. inert gegen das in ihnen fließende Medium und beständig gegen hohe und tiefe Temperaturen sowie gegen mechanische Belastung sein.

Einschichtige Rohre aus Polyolefinen sind für eine Reihe von Anwendungen ungeeignet. So besitzen Polyolefine eine nicht ausreichende Sperrwirkung gegen Kraftstoffe. Dies führt beispielsweise dazu, daß wegen des weiterentwickelten Umweltbewußtseins und der entsprechenden Verschärfung der gesetzlichen Regelungen einschichtige Polyolefinrohre zum Transport von Kraftstoffen, beispielsweise in unterirdisch verlegten Versorgungsleitungen im Tankstellenbereich, durch Rohre mit verbesserter Sperrwirkung ersetzt werden müssen.

In der JP-A 51-92880 werden Verbunde, Rohre und Hohlkörper aus einer Polyesterschicht und einer Polyolefinschicht beschrieben, in denen diese beiden Schichten durch eine Mittelschicht aus einem modifizierten Polyethylen, das 0,1 bis 10 Mol-% einer ungesättigten Carbonsäure bzw. eines Derivats hiervon enthält, verbunden sind. Diese Mittelschicht kann aus Copolymeren von Ethylen und Methacrylsäure, Ethylen und Acrylsäure sowie Ethylen und Vinylacetat bestehen. In den Beispielen dieser Schrift wird gezeigt, daß die Schichten dieser Verbunde weiterhin mechanisch voneinander getrennt werden können. Es liegt also keine kohäsive Schichtenhaftung vor.

Die GB-A-2 029 766 beschreibt laminare Schichtenverbunde, bei denen ein maleinsäuremodifiziertes Blockcopolymer als Haftvermittler verwendet wird.

Gegenstand der EP-A-0 522 380 ist eine mehrschichtige Sauerstoffbarrierefolie, bei der eine beispielsweise aus einem Polyester bestehende Trägerfolie mit einer Polyolefindeckschicht verklebt wird.

In der nicht vorveröffentlichten EP-A-0 637 509 wird eine Kraftstoffleitung beschrieben, die aus einem Fluorpolymeren oder Polyamid als Innenschicht, einem Polyalkylennaphthalat als Zwischenschicht und einem Thermoplasten oder thermoplastischen Elastomer als Außenschicht besteht, wobei die Innenschicht und die Zwischenschicht durch einen Haftvermittler verbunden werden.

Ein mehrschichtiges Kunststoffrohr, das mindestens aus einer Außenschicht auf Basis von Polyamid und einer Schicht aus einem mit Isocyanaten modifizierten Polyester besteht, ist aus der EP-A-0 569 681 bekannt.

Die EP-A-0 542 184 beschreibt ein mehrschichtiges Kunststoffrohr, bei dem eine Innen- und eine Außenschicht auf Basis von Polyamid durch eine Zwischenschicht aus einem Gemisch eines linearen, kristallinen Polyesters und einem reaktive Gruppen aufweisenden Polymeren fest miteinander verbunden werden. Ein ähnliches System wird in der EP-A-0 542 182 beschrieben, die einen thermoplastischen Mehrschichtverbund zum Gegenstand hat, bei dem mindestens eine Schicht einer Formmasse auf Basis von Polyamid mit mindestens einer Schicht einer Formmasse auf Basis eines Gemisches aus einem teilkristallinen thermoplastischen Polyester und einer Epoxigruppen aufweisenden Verbindung fest miteinander verbunden ist.

Aufgabe der vorliegenden Erfindung sind mehrschichtige Kunststoffrohre auf Basis von Polyolefinen, insbesondere Polyethylen, die gegenüber einschichtigen Rohren aus Polyolefinen eine verbesserte Sperrwirkung gegen (petro)chemische Stoffe, insbesondere gegen methanolhaltige Kraftstoffe, aufweisen. Weiterhin sollen alle benachbarten Schichten kohäsiv miteinander verbunden sein.

Diese Aufgabe wird gelöst durch mehrschichtige Kunststoffrohre, die folgende Schichten enthalten:
I. mindestens eine Schicht auf Basis eines Polyolefins,
II. mindestens eine Schicht auf Basis eines thermoplastischen Polyesters und einer Verbindung mit zwei oder mehr Epoxidgruppen, einer Verbindung mit zwei oder mehr Oxazolingruppen oder einer Verbindung mit zwei oder mehr Isocyanatgruppen, verbunden über
III. eine dazwischenliegende Schicht aus einem geeigneten Haftvermittler, der reaktive Gruppen enthält,
wobei benachbarte Schichten miteinander kohäsiv verbunden sind.

Die Schicht I besteht bevorzugt aus einer Formmasse auf Basis von Polyethylen oder Polypropylen.

Die Schicht II besteht bevorzugt aus einem linearen, kristallinen Polyester und besonders bevorzugt aus Polyethylenterephthalat oder Polybutylenterephthalat.

In einer bevorzugten Ausführungsform besteht die Schicht II aus einer Formmasse auf Basis eines Gemisches aus
a. 99 bis 60 Gew.-% eines thermoplastischen Polyesters
   und
b. 1 bis 40 Gew.-% einer mindestens zwei Isocyanat-, Epoxid- oder Oxazolingruppen aufweisenden Verbindung,
wobei die der Komponente II.b. entstammenden funktionellen Gruppen in der Komponente II. in einer Konzentration zwischen 0,01 und 3 Gew.-% enthalten sind.

Der Haftvermittler der Schicht III besteht bevorzugt aus einer Basis von Polyolefinen, die zusätzlich reaktive Gruppen aufweist.

Die Schicht I besteht aus Formmassen auf Basis von Polyolefinen. Geeignet sind Homopolymere und Copolymere auf Basis u. a. von Ethylen, Propylen, 1-Buten, 1-Hexen und 1-Octen. Weiterhin geeignet sind Copolymere und Terpolymere, die zusätzlich zu den o. g. Monomeren weitere Monomere, insbesondere Diene enthalten, wie beispielsweise Ethylidennorbornen, Cyclopentadien oder Butadien.

Bevorzugt sind Formmassen auf Basis von Polypropylen, besonders bevorzugt auf Basis von Polyethylen.

Die Formmassen für die Schicht I können entsprechend dem Stand der Technik vernetzt werden, um so eine Verbesserung der mechanischen Eigenschaften, z. B. der Kälteschlagzähigkeit und der Wärmeformbeständigkeit, zu erzielen. Die Vernetzung erfolgt beispielsweise durch Strahlenvernetzung oder mittels Feuchtevernetzung von silanhaltigen Polyolefinformmassen.

Die thermoplastischen Polyester der Schicht II weisen nachstehende Grundstruktur auf: 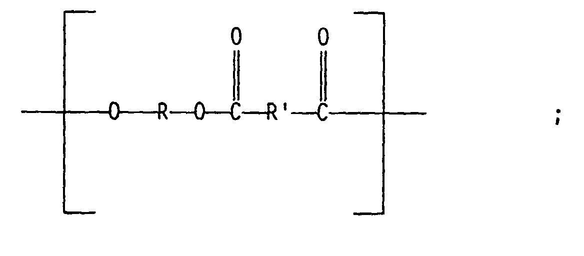 dabei stellt R einen divalenten verzweigten oder nichtverzweigten aliphatischen und/oder cycloaliphatischen Rest mit 2 bis 12, vorzugsweise 2 bis 8 C-Atomen, in der Kohlenstoffkette und R' einen divalenten aromatischen Rest mit 6 bis 20, vorzugsweise 8 bis 12, C-Atomen im Kohlenstoffgerüst dar.

Als Beispiele für die bei der Herstellung einzusetzenden Diole seien Ethylenglykol, Trimethylenglykol, Tetramethylenglykol, Hexamethylenglykol, Neopentylglykol, Cyclohexandimethanol o. ä. genannt.

Bis zu 25 Mol-% des genannten Diols können durch ein Diol mit nachstehender allgemeiner Formel 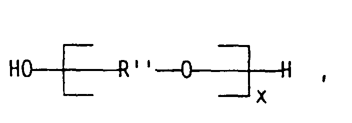 wobei R'' einen zweiwertigen Rest mit 2 bis 4 C-Atomen bedeutet und x einen Wert von 2 bis 50 annehmen kann, ersetzt sein.

Bevorzugt als Diole werden Ethylenglykol und Tetramethylenglykol eingesetzt.

Als bei der Herstellung einzusetzende aromatische Dicarbonsäure kommen z. B. Terephthalsäure, Isophthalsäure, 1.4-, 1.5-, 2.6- bzw. 2.7-Naphthalindicarbonsäure, Diphensäure, Diphenylether-4.4'-dicarbonsäure oder deren polyesterbildende Derivate, wie z. B. Dimethylester, in Frage.

Bis zu 20 Mol-% dieser Dicarbonsäuren können durch aliphatische Dicarbonsäuren, wie z. B. Bernsteinsäure, Maleinsäure, Fumarsäure, Sebacinsäure, Dodecandisäure u. a. ersetzt sein.

Die Herstellung der thermoplastischen Polyester gehört zum Stand der Technik (DE-OSS 24 07 155, 24 07 156; Ullmanns Encyclopädie der technischen Chemie, 4. Auflage, Band 19, Seite 65 ff, Verlag Chemie GmbH, Weinheim 1980).

Die erfindungsgemäß eingesetzten Polyester weisen eine Viskositätszahl (J-Wert) im Bereich von 80 bis 240 cm³/g auf.

Bevorzugte thermoplastische Polyester sind Polyethylenterephthalat und Polybutylenterephthalat.

Sofern erforderlich, können die Polyester schlagzäh eingestellt werden.

In einer bevorzugten Ausführungsform werden die Polyester mit Verbindungen modifiziert, die mindestens zwei Isocyanatgruppen tragen (Komponente II.b.). Hierfür eignen sich di- und höherfunktionelle Isocyanate, insbesondere aromatische und (cyclo-)aliphatische Isocyanate wie beispielsweise 1,4-Phenylendiisocyanat, 2,4-Toluylendiisocyanat, 2,6-Toluylendiisocyanat, 1,5-Naphthylendiisocyanat, 1,6-Hexamethylendiisocyanat, Diphenylmethan-2,4-diisocyanat, Diphenylmethan-4,4'-diisocyanat, Diphenylmethan-2,2'-diisocyanat, Isophorondiisocyanat, 1,4-Tetramethylendiisocyanat, 1,12-Dodecandiisocyanat und Triphenylmethan-4,4',4''-triisocyanat. Weitere Beispiele sind Cyclohexan-1,3-diisocyanat, Cyclohexan-1,4-diisocyanat, Cyclobutan-1,3-diisocyanat, 2,4-Hexahydrotoluylendiisocyanat, 2,6-Hexahydrotoluylendiisocyanat, Hexahydro-1,3-phenylendiisocyanat, Hexahydro-1,4-phenylendiisocyanat, Norbornandiisocyanat, p- oder m-Xylylendiisocyanate, Perhydro-2,4-diphenylmethandiisocyanat und Perhydro-4,4'diphenylmethandiisocyanat.

Geeignet sind auch Isocyanate, die Isocyanurat-, Urethan-, acylierte Harnstoff-, Biuret-, Carbodiimid- oder Estergruppen aufweisen. Ferner können oligomere Fettsäure enthaltende Isocyanate oder perchlorierte Arylisocyanate verwendet werden.

Die Isocyanate können auch als blockierte Isocyanate eingesetzt werden. Als Beispiel seien Umsetzungsprodukte der oben genannten Isocyanate mit Diolen, Lactamen oder Oximen angeführt.

Bevorzugt werden 2,4- und 2,6-Toluylendiisocyanate sowie Isocyanate, die Isocyanurat-, Urethan-, Harnstoff- oder Biuretgruppen aufweisen. Weiterhin bevorzugt werden Isophorondiisocyanate sowie davon abgeleitete Isocyanurate oder daraus hergestellte Mischungen.

In einer weiteren bevorzugten Ausführungsform bestehen die Schichten II aus
a. 99 bis 95 Gew.-% eines thermoplastischen Polyesters
   und
b. 1 bis 5 Gew.-% eines Gemisches aus
   1. 30 bis 70 Gew.-% mindestens einer zwei Isocyanatgruppen aufweisenden Verbindung
      und
   2. 30 bis 70 Gew.-% mindestens einer mehr als zwei Isocyanatgruppen aufweisenden Verbindung,
wobei die der Komponente II.b. entstammenden Isocyanatgruppen in der Komponente II. in einer Konzentration zwischen 0,01 und 3 Gew.-% enthalten sind.

Als Komponente II.b.1. werden Verbindungen eingesetzt, die zwei Isocyanatgruppen tragen. Als solche eignen sich alle oben genannten Verbindungen mit zwei Isocyanatgruppen. Als besonders vorteilhaft haben sich Isophorondiisocyanat sowie Umsetzungsprodukte davon mit sich selbst sowie mit geeigneten Reaktanten, wie z. B. α,ω-Diole mit 2 - 10 C-Atomen in der Kohlenstoffkette, erwiesen.

Bevorzugte Umsetzungsprodukte ergeben sich beispielsweise aus der Reaktion mindestens zweier Moleküle Isophorondiisocyanat, wobei die Anbindung durch Reaktion von jeweils zwei Isocyanatgruppen unter Ausbildung einer Biuretgruppe erfolgt.

Weitere vorteilhafte Umsetzungsprodukte werden beispielsweise durch Umsetzung von jeweils zwei Isophorondiisocyanat-Molekülen mit einem Molekül Diol erhalten, wobei jeweils eine Isocyanatgruppe des Isophorondiisocyanats mit einer der Hydroxylgruppen des Diols eine Urethanbindung ausbildet. Beispiele für besonders gut geeignete Diole sind Butandiol und Diethylenglykol.

Als Komponente II.b.2. werden Verbindungen eingesetzt, die mehr als zwei und bevorzugt genau drei Isocyanatgruppen enthalten. Als solche eignen sich beispielsweise Triphenylmethan-4,4',4''-triisocyanat, weiterhin Umsetzungsprodukte aus den zu Komponente II.b.1. weiter oben aufgeführten Diisocananten, insbesondere Triisocyanurate dieser Diisocyanate, wie beispielsweise das Triisocyanurat, das aus Umsetzung von jeweils drei Molekülen Hexamethylendiisocyanat entsteht. Besonders bevorzugt ist das Triisocyanurat, das durch Umsetzung von jeweils drei Molekülen Isophorondiisocyanat entsteht.

Die Isocyanatgruppen der Komponenten II.b.1. und II.b.2. können blockiert vorliegen. Die Blockierung von Isocyanatgruppen ist bekannt (z. B. Paint Resin 58 (1988) 5, 18-19). Beispielsweise sei eine Blockierung durch Umsetzung der Isocyanatgruppen mit Diolen, Pyrazolen, Oximen, insbesondere Ketoximen, sowie Lactamen, insbesondere Caprolactam, angeführt.

Den Formmassen für die Schichten gemäß I sowie II können übliche Hilfs- und Zusatzstoffe wie z. B. Flammschutzmittel, Stabilisatoren, Weichmacher, Verarbeitungshilfsmittel, Viskositätsverbesserer, Füllstoffe, insbesondere solche zur Verbesserung der Leitfähigkeit, Pigmente o. ä. zugefügt werden.

Als Haftvermittler der Schicht III sind Formmassen geeignet, die bei der Herstellung der mehrschichtigen Rohre durch Coextrusion mit den benachbarten Schichten I und II einen kohäsiven Verbund ergeben, so daß die Schichten im fertigen Rohr mechanisch nicht mehr voneinander getrennt werden können.

Die Formmassen für die geeigneten Haftvermittler bestehen aus einer Polymerbasis, die mit geeigneten reaktiven Gruppen modifiziert ist. Die reaktiven Gruppen können hierbei entweder durch Copolymerisation zusammen mit dem Olefin oder durch eine Pfropfreaktion eingebracht werden. Bei der Pfropfreaktion wird ein vorgebildetes Polyolefin auf bekannte Weise mit einem ungesättigten, funktionellen Monomeren und vorteilhafterweise einem Radikalspender bei erhöhter Temperatur umgesetzt.

Als reaktive Gruppen geeignet sind z. B. Säureanhydridgruppen, N-Acyllactamgruppen, Carbonsäuregruppen, Epoxidgruppen, Oxazolingruppen, xysilangruppen oder Hydroxylgruppen. Hiervon werden bevorzugt Säureanhydridgruppen verwendet. Besonders geeignet sind Haftvermittler mit 0,05 bis 10 Gew.-% Anhydridgruppen, wobei ein Gehalt von 0,2 bis 3 Gew.-% bevorzugt und ein Gehalt von 0,25 bis 1 Gew.-% besonders bevorzugt ist.

Die Auswahl der geeigneten Basis hängt von der Zusammensetzung der Schicht I auf Basis eines Polyolefins ab: Die Basis des Haftvermittlers sollte so gewählt werden, daß der Haftvermittler mit der polyolefinischen Schicht I möglichst gut verträglich, bevorzugt mischbar, ist. Besteht die Schicht I aus einer Formmasse auf Basis von Polypropylen, so ist Polypropylen auch als Basis für den Haftvermittler geeignet.

Im bevorzugten Fall besteht die Schicht I aus einer Formmasse auf Basis von Polyethylen. In diesem Fall haben sich unter anderem Ethylen-Methylmethacrylat-Maleinsäureanhydrid-Copolymere und besonders bevorzugt Ethylen-Vinylacetat-Maleinsäureanhydrid-Copolymere als besonders gut geeignete Haftvermittler herausgestellt.

Geeignete funktionalisierte Polyethylene und Polypropylene sind erhältlich u. a. unter den Handelsnamen BYNEL (DuPont), PRIMACOR (Dow), POLY-BOND (BP), OREVAC (Elf), HERCOPRIME (Hercules), EPOLENE (Eastman), HOSTA-MONT (Hoechst), EXXELOR (Exxon) und ADMER (Mitsui Petrochemical).

Die erfindungsgemäßen, mehrschichtigen Rohre können die Schichten I, II und III mehrmals enthalten. Hierbei sind die Schichten so anzuordnen, daß die Schichten I und II immer über eine dazwischenliegende Schicht III miteinander verbunden sind.

Beispiele für mögliche Schichtenanordnungen zeigt die folgende Tabelle.

**Tabelle 1**

| Schichtenanordnung von erfindungsgemäßen, mehrschichtigen Kunststoffrohren (Aufbau von außen nach innen) | |
|---|---|
| Schichtenanordnung Nr. | Ausführung |
| 1 | Schicht I |
| | Schicht III |
| | Schicht II |
| 2 | Schicht II |
| | Schicht III |
| | Schicht I |
| 3 | Schicht I |
| | Schicht III |
| | Schicht II |
| | Schicht III |
| | Schicht I |
| 4 | Schicht II |
| | Schicht III |
| | Schicht I |
| | Schicht III |
| | Schicht II |

Die Schichtenanordnung Nr. 1 ist hierbei bevorzugt.

Weiterhin bevorzugt sind mehrschichtige Rohre mit dieser Schichtenanordnung, bei denen die Dicke der Schicht II 1 bis 50 %, bevorzugt 5 bis 20 %, der gesamten Wandstärke ausmacht.

Die Dicke der Schicht III liegt bevorzugt zwischen 0,05 und 20 %, besonders bevorzugt zwischen 0,4 und 4 % der gesamten Wandstärke. Die gesamte Wandstärke ist hierbei die Summe der einzelnen Schichtdicken und ist gleich der Wandstärke des Rohres.

Die Herstellung der mehrschichtigen Rohre erfolgt vorzugsweise mittels Coextrusion.

Die erfindungsgemäßen, mehrschichtigen Rohre weisen in hervorragendem Maße eine gute Beständigkeit sowie Sperrwirkung gegen Diffusion von chemischen Agenzien, Lösemitteln und Kraftstoffen, insbesondere auch methanolhaltigen Kraftstoffen, auf. Ferner sind die Schichten kohäsiv miteinander verbunden, so daß z. B. bei thermischer Ausdehnung, Biegen oder Thermoformen des mehrschichtigen Rohres kein Abscheren der verschiedenen Schichten voneinander auftritt. Diese gute Schichtenhaftung bleibt auch bei längerem Kontakt mit Kraftstoffen, insbesondere auch methanolhaltigen Kraftstoffen, erhalten.

Bevorzugt eingesetzt werden die erfindungsgemäßen Kunststoffrohre zum Transport chemischer, insbesondere petrochemischer, Stoffe und zum Durchleiten von Brems-, Kühl- und Hydraulikflüssigkeiten sowie Kraftstoff, insbesondere auch methanolhaltigem und ethanolhaltigem Kraftstoff.

Die Rohre sind insbesondere geeignet, im Tankstellenbereich und ähnlichen Bereichen über- und untererdig verlegt zu werden, um (petro)chemische Stoffe, insbesondere Kraftstoff, durch sie zu befördern.

Die Rohre sind auch geeignet, im Kraftfahrzeugsektor zum Durchleiten von Kraftstoffen, insbesondere methanolhaltigen Kraftstoffen, verwendet zu werden.

Die Rohre zeigen nicht nur eine hervorragende Sperrwirkung gegen Diffusion von chemischen Agenzien, die im Inneren durch das Rohr gefördert werden, sondern auch gegen chemische Agenzien, Lösemittel, wäßrige Salzlösungen u. ä., die von außen durch die Rohrwand in die im Rohr transportierten Flüssigkeiten eindringen können. Deshalb sind die erfindungsgemäßen Rohre auch für den Transport von Trinkwasser und anderer zu schützender Flüssigkeiten geeignet, wenn die Gefahr einer Verunreinigung durch Diffusion von außen nach innen nicht ausgeschlossen werden kann. Dies gilt beispielsweise für Trinkwasserleitungen, die in kontaminiertem oder schadstoffbelastetem Erdreich verlegt werden.

Eine weitere Verwendung der erfindungsgemäßen mehrschichtigen Rohre besteht darin, daß, beispielsweise durch Blasformen, aus ihnen Hohlkörper wie Tankbehälter oder Einfüllstutzen, insbesondere für den Kraftfahrzeugsektor, hergestellt werden.

Die in den Beispielen aufgeführten Ergebnisse wurden mit Hilfe nachstehender Meßverfahren bestimmt.

Die Prüfung der mechanischen Trennbarkeit an den Grenzflächen der Schichten erfolgt mit einem Metallkeil (Schneidwinkel 5 Grad; Auflagegewicht: 2,5 kg), wobei versucht wird, die zu prüfenden Materialgrenzschichten voneinander zu trennen. Erfolgt die Trennung an der Grenze zwischen den Komponenten, so ist die Haftung schlecht. Erfolgt die Trennung dagegen ganz oder überwiegend innerhalb einer der beiden Komponenten, so liegt eine kohäsive Schichtenhaftung im Sinne der vorliegenden Erfindung vor.

Die Bestimmung der Diffusion von Kraftstoffanteilen erfolgt an Rohren mit einem Kraftstoffgemisch (Kraftstoff M15: 42,5 Vol.-% Isooctan, 42,5 Vol.-% Toluol und 15 Vol.-% Methanol; Fuel C: 50 Vol.-% Isooctan und 50 Vol.-% Toluol) bei 40 °C und bei 23 °C. Die Proben mit der Länge von 200 mm werden mit dem Kraftstoffgemisch gefüllt und sind während der Messung mit einem gefüllten Kraftstoffvorratsgefäß verbunden. Die Bestimmung der Kraftstoffdiffusion erfolgt durch Messung des Gewichtsverlustes. Die Diffusion wird als Masseverlust durch Diffusion über die Zeit (Messung alle 24 h) ermittelt. Als Maß wird der pro Fläche registrierte Masseverlust angegeben, der gemessen wird, wenn sich der Diffusionsprozeß im Gleichgewicht befindet, d. h., wenn sich der pro 24 h ermittelte Masseverlust mit der Zeit nicht mehr ändert.

Die Bestimmung der Lösungsviskosität (Viskositätszahl J) der Polyester erfolgt in einer 0,5 gew.-%igen Phenol/o-Dichlorbenzol-Lösung (Gewichtsverhältnis 1 : 1) bei 25 °C gemäß DIN 53 728/ISO 1628/5 - Teil 5.

Für die Bestimmung der Isocyanatgruppen werden 6 g der Komponente II (Polyester, Isocyanat) bei 180 °C in einem Gemisch aus Dichlorbenzol/Dibutylamin (80 : 20 Vol.-%) gelöst. Die Lösung wird bei 20 °C mit 10 %-iger Salzsäure gegen Bromphenol als Indikator titriert (DIN 53 185).

Die Bestimmung der MFI-Werte der Polyolefine erfolgte bei 190 °C mit einem Auflagegewicht von 5 kg nach DIN 53 735.

Mit Buchstaben gekennzeichnete Beispiele sind nicht erfindungsgemäß.

### Beispiele

### Eingesetzte Polyolefine (Schicht I):

- PO 1:: Polyethylen hoher Dichte (HDPE); MFI (190/5) = 0,8 g/10 min;
VESTOLEN A 4042 R; Hüls AG.
- PO 2:: Polyethylen hoher Dichte (HDPE); MFI (190/5) = 0,5 g/10 min;
VESTOLEN A 5041 R; Hüls AG.

### Eingesetzte Polyester (Schicht II):

- PE 1:: Mischung aus
a. 98 Gew.-% Homopolybutylenterephthalat (J-Wert 115 cm³/g); VESTODUR 1000, Hüls AG
   und
b. 2 Gew.-% einer Mischung bestehend aus
b.1. 50 Gew.-% einer Verbindung, die aus 2 mol Isophorondiisocyanat und 1 mol Diethylenglykol hergestellt wurde, wobei die Verbindung jeweils über eine Urethanbindung erfolgte und die verbleibenden NCO-Gruppen mit Caprolactam blockiert sind,
   und
b.2. 50 Gew.-% Isocyanurat des Isophorondiisocyanats (VESTANAT T 1890; Hüls AG).
NCO-Gruppen-Konzentration in der Mischung PE 1: 0,08 Gew.-%.
- PE 2:: Mischung aus
a. 97 Gew.-% Homopolybutylenterephthalat (J-Wert 155 cm³/g); VESTODUR 1000; Hüls AG
   und
b. 3 Gew.-% einer Mischung bestehend aus
   b.1. 40 Gew.-% Isophorondiisocyanat, mit Caprolactam blockiert
      und
   b.2. 60 Gew.-% Isocyanurat des Isophorondiisocyanats, wobei die verbleibenden NCO-Gruppen mit Caprolactam blockiert sind.
NCO-Gruppen-Konzentration in der Mischung PE 2: 0,15 Gew.-%.
- PE 3:: Homopolybutylenterephthalat (J-Wert: 165 cm³/g; VESTODUR 3000; Hüls AG).

### Eingesetzte Haftvermittler (Schicht III):

- HV 1:: Formmasse auf Basis von Polyethylen (LDPE), modifiziert mit Maleinsäureanhydrid, so daß die Formmasse 0,4 Gew.-% -% Anhydridgruppen enthält.
- HV 2:: Formmasse auf Basis von Ethylen-Vinylacetat-Copolymer, modifiziert mit Maleinsäureanhydrid, so daß die Formmasse mehr als 0,1 Gew.-% Anhydridgruppen enthält.

### Herstellung der mehrschichtigen Rohre gemäß den Beispielen 1 bis 7 und den Vergleichsbeispielen A bis D (siehe Tabelle):

Es wurden ein-, zwei- und dreischichtige Rohre mit einer Gesamtwandstärke (= Wanddicke des Rohres) von 1,45 mm und einem Außendurchmesser von 12 mm hergestellt. Die Rohre wurden auf einer Laborextrusionsanlage mit einem Fünfschichtwerkzeug hergestellt (bei der Herstellung der ein-, zwei- und dreischichtigen Rohre bleiben die nicht benötigten Kanäle geschlossen).

Weiterhin wurden zwei- und dreischichtige Rohre mit
a) 5,8 mm Gesamtwandstärke und 63 mm Außendurchmesser
   und
b) 10 mm Gesamtwandstärke und 110 mm Außendurchmesser
hergestellt. Die Herstellung dieser Rohre erfolgte auf einer Produktionsanlage mit 3 Extrudern und einem Dreischichtwerkzeug.

Die Zylindertemperaturen lagen bei 205 °C (PO 1, PO 2); 255 °C (HV 1, HV 2), 270 °C (PE 1, PE 2, PE 3) und 280 °C (PE 3).

**Tabelle 2:**

| Rohre mit Außendurchmesser 12 mm, Wanddicke 1,45 mm | | | | | | |
|---|---|---|---|---|---|---|
| | Schichten- aufbau (von außen nach innen) | Schichtenhaftung | | Permeation von Kraftstoff [g/m² d] | | |
| | | Schichten nach der Rohrher- stellung | trennbar nach Lagerung 14 d in M15 bei 23 °C | M15 | | Fuel C |
| | | | | 23 °C | 40 °C | 40 °C |
| A | 1,45 mm PO 1 | entfällt | | 15 | 50 | 64 |
| | (Monorohr) | | | | | |
| B | 1,10 mm PO 1 | ja | ja | 0,1 | < 4 | < 1 |
| | 0,35 mm PE 1 | | | | | |
| C | 1,10 mm PO 1 | ja | ja | 0,1 | < 4 | < 1 |
| | 0,35 mm PE 3 | | | | | |
| 1 | 0,90 mm PO 1 | | | | | |
| | 0,20 mm HV 1 | nein | nein | 0,1 | 4 | 1 |
| | 0,35 mm PE 1 | | | | | |
| 2 | 0,90 mm PO 2 | | | | | |
| | 0,20 mm HV 2 | nein | nein | 0,1 | 4 | 1 |
| | 0,35 mm PE 2 | | | | | |

**Tabelle 3:**

| Rohre mit | | | | | |
|---|---|---|---|---|---|
| a) Außendurchmesser 63 mm, Wanddicke 5,8 mm und | | | | | |
| b) Außendurchmesser 110 mm, Wanddicke 10 mm. | | | | | |
| | Schichten- aufbau (von außen nach innen) | Außendurchmesser | Wanddicke | Schichtenhaftung | |
| | | | | Schichten trennbar | |
| | | [mm] | [mm] | nach der Rohrher- stellung | nach Lagerung 20 d in M15 bei 23 °C |
| D | 5,20 mm PO 1 | 63 | 5,8 | ja | ja |
| | 0,60 mm PE 1 | | | | |
| E | 5,20 mm PO 2 | 63 | 5,8 | ja | ja |
| | 0,60 mm PE 3 | | | | |
| 3 | 5,20 mm PO 1 | | | | |
| | 0,05 mm HV 1 | 63 | 5,8 | nein | nein |
| | 0,55 mm PE 1 | | | | |
| 4 | 8,80 mm PO 1 | | | | |
| | 0,05 mm HV 1 | 110 | 10 | nein | nein |
| | 1,15 mm PE 1 | | | | |
| 5 | 5,20 mm PO 2 | | | | |
| | 0,05 mm HV 1 | 63 | 5,8 | nein | nein |
| | 0,55 mm PE 1 | | | | |
| 6 | 5,20 mm PO 1 | | | | |
| | 0,05 mm HV 1 | 63 | 5,8 | nein | nein |
| | 0,55 mm PE 3 | | | | |
| 7 | 8,80 mm PO 1 | | | | |
| | 0,05 mm HV 1 | 110 | 10 | nein | nein |
| | 1,15 mm PE 3 | | | | |

## Patentansprüche

1. Mehrschichtiges Kunststoffrohr,
dadurch gekennzeichnet,
daß es folgende Schichten enthält:
I. mindestens eine Schicht auf Basis eines Polyolefins,
II. mindestens eine Schicht aus einer Formmasse, die neben einem thermoplastischen Polyester, welcher schlagzäh eingestellt sein kann und übliche Hilfs- und Zusatzstoffe enthalten kann, eine Verbindung mit zwei oder mehr Epoxigruppen, eine Verbindung mit zwei oder mehr Oxazolingruppen oder eine Verbindung mit zwei oder mehr Isocyanatgruppen enthält,
und
III. mindestens eine zwischen I und II liegende Schicht aus einem Haftvermittler, der reaktive Gruppen enthält,
wobei benachbarte Schichten kohäsiv miteinander verbunden sind.

2. Mehrschichtiges Kunststoffrohr gemäß Anspruch 1,
dadurch gekennzeichnet,
daß die Schicht II aus einer Formmasse auf Basis von Polybutylenterephthalat oder Polyethylenterephthalat besteht.

3. Mehrschichtiges Kunststoffrohr gemäß einem der Ansprüche 1 oder 2,
dadurch gekennzeichnet,
daß die Schicht II aus einer Formmasse auf Basis eines Gemisches aus
a. 99 bis 60 Gew.-% eines linearen, kristallinen Polyesters
und
b. 1 bis 40 Gew.-% einer mindestens zwei Isocyanat-, Epoxid- oder Oxazolingruppen aufweisenden Verbindung
besteht, wobei die der Komponente II.b. entstammenden funktionellen Gruppen in der Komponente II. in einer Konzentration zwischen 0,01 und 3 Gew.-% enthalten sind.

4. Mehrschichtiges Kunststoffrohr gemäß einem der vorhergehenden Ansprüche,
dadurch gekennzeichnet,
daß die Schicht II aus einer Formmasse auf Basis eines Gemisches aus
a. 99 bis 95 Gew.-% eines linearen, kristallinen Polyesters
und
b. 1 bis 5 Gew.-% eines Gemisches aus
1. 30 bis 70 Gew.-% mindestens einer zwei Isocyanatgruppen aufweisenden Verbindung
und
2. 30 bis 70 Gew.-% mindestens einer mehr als zwei Isocyanatgruppen aufweisenden Verbindung
besteht, wobei die der Komponente II.b. entstammenden Isocyanatgruppen in der Komponente II. in einer Konzentration zwischen 0,01 und 3 Gew.-% enthalten sind.

5. Mehrschichtiges Kunststoffrohr gemäß einem der vorhergehenden Ansprüche,
dadurch gekennzeichnet,
daß die Schicht I aus einer Formmasse auf Basis von Polyethylen oder Polypropylen besteht.

6. Mehrschichtiges Kunststoffrohr gemäß einem der vorhergehenden Ansprüche,
dadurch gekennzeichnet,
daß der Haftvermittler der Schicht III Säureanhydridgruppen enthält.

7. Mehrschichtiges Kunststoffrohr gemäß Anspruch 6,
dadurch gekennzeichnet,
daß der Haftvermittler der Schicht III 0,05 bis 10 Gew.-% Säureanhydridgruppen enthält.

8. Mehrschichtiges Kunststoffrohr gemäß Anspruch 7,
dadurch gekennzeichnet,
daß der Haftvermittler der Schicht III 0,2 bis 3 und bevorzugt 0,25 bis 1 Gew.-% Säureanhydridgruppen enthält.

9. Mehrschichtiges Kunststoffrohr gemäß einem der Ansprüche 6 bis 8,
dadurch gekennzeichnet,
daß die Anhydridgruppen in der Schicht III durch Umsetzung der Basis mit Maleinsäureanhydrid erhalten werden.

10. Mehrschichtiges Kunststoffrohr gemäß einem der vorhergehenden Ansprüche,
dadurch gekennzeichnet,
daß das Rohr aus drei Schichten mit folgender Anordnung besteht:
Außenschicht: Schicht I
Mittelschicht: Schicht III
Innenschicht: Schicht II.

11. Mehrschichtiges Kunststoffrohr gemäß Anspruch 10,
dadurch gekennzeichnet,
daß die Dicke der Schicht II 1 bis 50 % der gesamten Wandstärke beträgt, wobei die gesamte Wandstärke die Summe der einzelnen
Schichtdicken ist.

12. Mehrschichtiges Kunststoffrohr gemäß Anspruch 11,
dadurch gekennzeichnet,
daß die Dicke der Schicht II 5 bis 20 % der gesamten Wandstärke beträgt.

13. Mehrschichtiges Kunststoffrohr gemäß einem der vorhergehenden Ansprüche,
dadurch gekennzeichnet,
daß die Dicke der Schicht III 0,05 bis 20 %, bevorzugt 0,4 bis 4 % der gesamten Wandstärke beträgt, wobei die gesamte Wandstärke die Summe der einzelnen Schichtdicken ist.

14. Verwendung des mehrschichtigen Kunststoffrohres gemäß einem der Ansprüche 1 bis 13 für den Transport (petro)chemischer Stoffe.

15. Verwendung des mehrschichtigen Kunststoffrohres gemäß einem der Ansprüche 1 bis 13 zur Herstellung von Kraftstoffleitungen für den Transport von Kraftstoff im Tankstellenbereich.

16. Verwendung des mehrschichtigen Kunststoffrohres gemäß einem der Ansprüche 1 bis 13 im Kraftfahrzeugsektor zum Durchleiten von Brems-, Kühl- und Hydraulikflüssigkeit sowie Kraftstoff.

17. Verwendung des mehrschichtigen Kunststoffrohres gemäß einem der Ansprüche 1 bis 13 zur Herstellung von Trinkwasserleitungen.

18. Verwendung des mehrschichtigen Kunststoffrohres gemäß einem der Ansprüche 1 bis 13 zur Herstellung von Hohlkörpern.

19. Verwendung des mehrschichtigen Kunststoffrohres gemäß einem der Ansprüche 1 bis 13 zur Herstellung von Einfüllstutzen oder Tankbehältern im Kraftfahrzeugsektor.

## Claims

1. A multilayer plastic pipe, characterized in that it comprises the following layers:
I. at least one layer based on a polyolefin,
II. at least one layer of a moulding composition which, in addition to a thermoplastic polyester which can be modified for impact-resistance and can contain customary auxiliaries and additives, contains a compound having two or more epoxy groups, a compound having two or more oxazoline groups or a compound having two or more isocyanate groups,
and
III. at least one layer lying between I and II comprising a coupling agent containing reactive groups,
with adjacent layers being cohesively bonded to one another.

2. A multilayer plastic pipe according to claim 1, characterized in that the layer II is composed of a moulding composition based on polybutylene terephthalate or polyethylene terephthalate.

3. A multilayer plastic pipe according to either of claims 1 and 2, characterized in that the layer II is composed of a moulding composition based on a mixture of
a. from 99 to 60% by weight of a linear, crystalline polyester
and
b. from 1 to 40% by weight of a compound containing at least two isocyanate, epoxy or oxazoline groups,
with the functional groups originating from the component II.b being present in the component II. in a concentration of from 0.01 to 3% by weight.

4. A multilayer plastic pipe according to any one of the preceding claims, characterized in that the layer II is composed of a moulding composition based on a mixture of
a. from 99 to 95% by weight of a linear, crystalline polyester
and
b. from 1 to 5% by weight of a mixture of
1. from 30 to 70% by weight of at least one compound containing two isocyanate groups
and
2. from 30 to 70% by weight of at least one compound containing more than two isocyanate groups,
with the isocyanate groups originating from the component II.b. being present in the component II. in a concentration of from 0.01 to 3% by weight.

5. A multilayer plastic pipe according to any one of the preceding claims, characterized in that the layer I is composed of a moulding composition based on polyethylene or polypropylene.

6. A multilayer plastic pipe according to any one of the preceding claims, characterized in that the coupling agent of the layer III contains acid anhydride groups.

7. A multilayer plastic pipe according to claim 6, characterized in that the coupling agent of the layer III 5 contains from 0.05 to 10% by weight of acid anhydride groups.

8. A multilayer plastic pipe according to claim 7, characterized in that the coupling agent of the layer III contains from 0.2 to 3 and preferably from 0.25 to 1% by 0 weight of acid anhydride groups.

9. A multilayer plastic pipe according to any one of claims 6 to 8, characterized in that the anhydride groups in the layer III are obtained by reaction of the base with maleic anhydride.

10. A multilayer plastic pipe according to any one of the preceding claims, characterized in that the pipe is composed of three layers having the following arrangement:
External layer: Layer I
Intermediate layer: Layer III
Internal layer: Layer II.

11. A multilayer plastic pipe according to claim 10, characterized in that the thickness of the layer II is from 1 to 50% of the total wall thickness, the total thickness being the sum of the individual layer thicknesses.

12. A multilayer plastic pipe according to claim 11, characterized in that the thickness of the layer II is from 5 to 20% of the total wall thickness.

13. A multilayer plastic pipe according to any one of the preceding claims, characterized in that the thickness of the layer III is from 0.05 to 20%, preferably from 0.4 to 4%, of the total wall thickness, the total wall thickness being the sum of the individual layer thicknesses.

14. Use of the multilayer plastic pipe according to any one of claims 1 to 13 for the transport of (petro)-chemical material.

15. Use of the multilayer plastic pipe according to any one of claims 1 to 13 for producing fuel lines for the transport of fuel in petrol stations.

16. Use of the multilayer plastic pipe according to any one of claims 1 to 13 in the motor vehicle sector for conveying brake, cooling or hydraulic fluid or fuel.

17. Use of the multilayer plastic pipe according to any one of claims 1 to 13 for producing drinking water pipes.

18. Use of the multilayer plastic pipe according to any one of claims 1 to 13 for producing hollow bodies.

19. Use of the multilayer plastic pipe according to any one of claims 1 to 13 for producing filling ports or tanks in the motor vehicle sector.

## Revendications

1. Tube en matière plastique à plusieurs couches,
caractérisé en ce qu'
il contient les couches suivantes :
1- au moins une couche à base d'une polyoléfine,
2- au moins une couche en une masse moulable qui à côté d'un polyester thermoplastique pouvant être ajusté pour résister aux chocs et renfermé des substances auxiliaires et des additifs usuels, contient un composé avec deux ou davantage de groupes époxy, un composé avec deux ou davantage de groupes oxazolines ou un composé avec deux ou davantage de groupes isocyanate et,
3- au moins une couche située entre 1 et 2 à base d'un agent d'adhésion qui contient des groupes réactifs, grâce auquel des couches voisines sont liées entre elles d'une manière cohésive.

2. Tube en matière plastique à plusieurs couches selon la revendication 1,
caractérisé en ce que
la couche 2 est formée d'une masse moulable à base de téréphtalate de polybutylène ou de téréphtalate de polyéthylène.

3. Tube en matière plastique à plusieurs couches selon l'une des revendications 1 ou 2,
caractérisé en ce que
la couche 2 est formée d'une masse moulable à base d'un mélange de :
a- 99 à 60 % en poids d'un polyester linéaire, cristallin et,
b- 1 à 40 % en poids d'un composé qui possède au moins deux groupes isocyanate, époxyde ou oxazoline,
dans laquelle les groupes fonctionnels qui proviennent des composants IIb dans le composant II se trouvent à une concentration comprise entre 0,01 et 3 % en poids.

4. Tube en matière plastique à plusieurs couches selon l'une des revendications précédentes,
caractérisé en ce que
la couche 2 est formée d'une masse moulable à base d'un mélange de :
a- 99 à 95 % en poids d'un polyester linéaire cristallin et,
b- 1 à 5 % en poids d'un mélange de :
1- 30 à 70 % en poids d'au moins un composé qui possède deux groupes isocyanate et,
2- 30 à 70 % en poids d'au moins un composé qui possède plus de deux groupes isocyanate dans lequel les groupes isocyanate qui proviennent des composants 2-b dans le composant II se trouvent à une concentration comprise entre 0,01 et 3 % en poids.

5. Tube en matière plastique à plusieurs couches selon l'une des revendications précédentes,
caractérisé en ce que
la couche 1 est formée d'une masse moulable à base de polyéthylène ou de polypropylène.

6. Tube en matière plastique à plusieurs couches selon l'une des revendications précédentes,
caractérisé en ce que
l'agent d'adhésion de la couche 3 contient des groupes anhydride d'acide.

7. Tube en matière plastique à plusieurs couches selon la revendication 6,
caractérisé en ce que
l'agent d'adhésion de la couche 3 renferme de 0,05 à 10 % en poids de groupes anhydride d'acide.

8. Tube en matière plastique à plusieurs couches selon la revendication 7,
caractérisé en ce que
l'agent d'adhésion de la couche 3 renferme de 0,2 à 3 et de préférence de 0,25 à 1% en poids de groupes anhydride d'acide.

9. Tube en matière plastique à plusieurs couches selon l'une des revendications 6 à 8,
caractérisé en ce que
les groupes anhydride dans la couche 3 sont obtenus par réaction d'une base avec l'anhydride d'acide maléique.

10. Tube en matière plastique selon l'une des revendications précédentes,
caractérisé en ce que
le tube est formé de trois couches avec la disposition suivante :
| | |
|---|---|
| Couche extérieure | couche 1 |
| Couche médiane | couche 3 |
| Couche intérieure | couche 2 |

11. Tube en matière plastique à plusieurs couches selon la revendication 10,
caractérisé en ce que
l'épaisseur de la couche 2 s'élève de 1 à 50 % de l'épaisseur totale des parois, dans laquelle l'épaisseur totale des parois est la somme des épaisseurs individuelles de couche.

12. Tube de matière plastique à plusieurs couches selon la revendication 11,
caractérisé en ce que
l'épaisseur de la couche 2 s'élève de 5 à 20 % de l'épaisseur totale des parois.

13. Tube de matière plastique à plusieurs couches selon l'une des revendications précédentes,
caractérisé en ce que
l'épaisseur de la couche 3 représente de 0,05 à 20 %, de préférence de 0,4 à 4 % de l'épaisseur totale des parois, dans laquelle l'épaisseur totale des parois est la somme des épaisseurs individuelles de couche.

14. Utilisation de tube en matière plastique à plusieurs couches selon l'une des revendications 1 à 13 pour le transport de substances (pétro) chimiques.

15. Utilisation du tube de matière plastique à plusieurs couches selon l'une des revendications 1 à 13 pour la fabrication de canalisations de carburants pour le transport de carburant dans le domaine des stations d'essence.

16. Utilisation du tube de matière plastique à plusieurs couches selon l'une des revendications 1 à 13 dans le secteur des véhicules automobiles pour transporter des liquides de frein, de refroidissement et hydraulique ainsi que des carburants.

17. Utilisation du tube de matière plastique à plusieurs couches selon l'une des revendications 1 à 13 en vue de la fabrication de conduites pour l'eau de ville.

18. Utilisation du tube de matière plastique à plusieurs couches selon l'une des revendications 1 à 13, pour la fabrication de corps creux.

19. Utilisation du tube de matière plastique à plusieurs couches selon l'une des revendications 1 à 13, pour la fabrication de tubulures de remplissage ou de récipients de réservoir dans le secteur automobile.
